# EUROPÄISCHE PATENTSCHRIFT

(11) **EP 1 000 285 B1**
(45) Veröffentlichungstag und Bekanntmachung des Hinweises auf die Patenterteilung: **28.04.2004**
(21) Anmeldenummer: 98942641.6
(22) Anmeldetag: 28.07.1998
(51) Int. Cl.: F16L 5/14, F16L 3/223, H02G 3/22

(54) **ANORDNUNG ZUM FÜHREN VON KABELN ODER LEITUNGEN**
DEVICE FOR GUIDING CABLES OR CONDUITS
DISPOSITIF DE GUIDAGE DE CABLES OU DE CONDUITES

(30) Priorität: 30.07.1997 DE 29713557 U
(43) Veröffentlichungstag der Anmeldung: 17.05.2000
(73) Patentinhaber: Murrplastik System-Technik GmbH, 71567 Oppenweiler (DE)
(72) Erfinder: FUNK, Rainer, D-71543 Wüstenrot (DE); EHMANN, Bruno, D-73563 Mögglingen (DE); SCHLICKSUPP, Hans, D-67059 Ludwigshafen (DE)
(74) Vertreter: Jeck, Anton, Dipl.-Ing.
(86) Internationale Anmeldenummer: PCT/EP1998/004703
(87) Internationale Veröffentlichungsnummer: WO 1999/006747

(56) Entgegenhaltungen:
- DE-A- 4 434 202
- US-A- 3 397 431
- US-A- 5 209 440

## Beschreibung

Die Erfindung betrifft eine Anordnung zum Führen von elektrischen Kabeln oder Leitungen nach dem Oberbegriff des Anspruchs 1.

Bei herkömmlichen Anordnungen der eingangs genannten Art, wie sie z.B. in der DE 35 44 785 A1 beschrieben sind und in Kraftfahrzeugkarosserien eingesetzt werden, besteht der Körper aus zwei dünnwandigen Kunststoffhalbschalen, dessen Innenraum mit einem gummielastischen Aufnahmekörper mit entsprechenden Öffnungen für die Kabel und Leitungen formschlüssig ausgefüllt ist. Der gewünschte Kraftschluss zwischen dem Körper und dem Aufnahmekörper wird durch Verbinden der Schalensegmente mittels Schnappverschlüssen erreicht. Eine einfache und betriebsgemäße Verbindung zwischen den einzelnen Teilen wird allerdings nur dann erreicht, wenn der Innendurchmesser der Kabelöffnung nur geringfügig kleiner ist als der Außendurchmesser des aufgenommenen Kabels. In allen anderen Fällen nämlich wird zwischen dem aufgenommenen Kabel und dem Aufnahmekörper entweder keine dichte Verbindung mit entsprechender Zugentlastung (Durchmesser des Kabels ist kleiner als der Durchmesser der Öffnung) erreicht oder aber, die Schalensegmente können miteinander nicht ohne weiteres betriebsgemäß verbunden werden (Durchmesser des Kabels ist deutlich größer als der Durchmesser der entsprechenden Öffnung). In solchen Fällen bietet sich an, einen weichen Gummi zu wählen, jedoch auf Kosten einer Zugentlastung, die bei Schaltschränken von entscheidender Bedeutung ist.

Schließlich ist in der EP 430 046 eine Vorrichtung zum Abdichten eines in einer Schrankwand eines Schaltschrankes angebrachten Lochs zur Durchführung eines Kabels offenbart, die aus Guss-Gehäuseteilen besteht, deren Innenraum ebenfalls mit komprimierbaren Schaumstoffklötzen aus Gummi ausgefüllt ist. An der Innenseite eines der beiden Gehäuseteile sind Schellen zur Kabelbefestigung angebracht, und zwar mittels Schrauben, die in einen Steg und quer zur Er-streckung der Kabel einschraubbar sind.

Nachteilig wird bei der bekannten Vorrichtung die Tatsache empfunden, dass eine ordnungsgemäße Verbindung der Kabel mit den zugeordneten Schellen nicht nur umständlich, sondern auch zeitaufwendig ist und dies insbesondere dann, wenn mehrere Vorrichtungen auf engstem Raum angeordnet sind bzw. die Vorrichtung für eine Vielzahl von Kabeln/Leitungen vorgesehen ist.

Ausgehend von dem obigen Stand der Technik liegt der Erfindung die Aufgabe zugrunde, hier Abhilfe zu schaffen.

Die gestellte Aufgabe wird erfindungsgemäß durch die Merkmale des Anspruchs 1 gelöst.

Man erkennt, dass die Erfindung jedenfalls dann verwirklicht ist, wenn es sich um eine Anordnung zum Führen, Klemmen und Abdichten von elektrischen Kabeln oder Leitungen handelt, die aus zwei Teilen besteht, wobei die Einlasspartie und die Auslasspartie die Besonderheiten aufweisen, dass hier ein das Kabel mit den Teilen annähernd dicht verbindbares Organ angeordnet bzw. anorderbar ist, das eine in dem Innenraum angeordnete Zugentlastung aufweist, die mit dem Kabel problemlos, ordnungsgemäß und im Bedarfsfall bereits vorab verbindbar ist. Die Einlasspartie und die Auslasspartie befinden sich hierbei in zwei mit Abstand zueinander angeordneten Wänden der Anordnung, so dass das Organ sich über die ganze Länge bzw. Tiefe des Raumes erstreckt. Da das Organ mit dem Körper an zwei verschiedenen Stellen zugfest und annähernd dicht verbunden ist, kann die Anordnung hohen Betriebsbelastungen des Kabels standhalten, und zwar bei annähernd absolut dichter Verbindung zwischen dem Kabel und der Anordnung.

Das Organ erfüllt daher zwei Aufgaben gleichzeitig, nämlich eine feste Verbindung des Kabels mit der Anordnung und eine dichte Führung des Kabels innerhalb der Anordnung. Diese Funktion wird bei der vorgeschlagenen Anordnung gleichzeitig zweimal erfüllt, da das Kabel innerhalb des Körpers an zwei verschiedenen Stellen zug- und druckfest positioniert ist. Das Organ besteht vorzugsweise aus Gummi, Kunststoff oder Glasfaser, ist zwischen den beiden Teilen kraft- und/oder formschlüssig einklemmbar und somit ortsfest anorderbar. Bei Herstellung einer betriebsgemäßen Führung des Kabels bzw. der Leitung durch die Wand wird vorzugsweise so vorgegangen, daß das in Längsrichtung geschlitzte und rohrförmige Organ (Tülle) aufgeklappt wird und das Kabel aufnimmt. Daraufhin wird die Zugentlastung mit dem Kabel z.B. mittels eines Kabel-Binders verbunden, in die Einlaßpartie und die Auslaßpartie gelegt, und die Teile werden schließlich miteinander ordnungsgemäß durch Zusammenklipsen oder -schrauben der beiden Teile verbunden. Bei mehreren Kabeln oder einer Vielzahl von Kabeln werden diese mit jeweils einem Organ bestückt, sodann in die zugeordneten Einlaß- und Auslaßpartien gelegt, und die Teile werden schließlich betriebsgemäß verbunden. Da die aus Kunststoff bestehenden Teile erfindungsgemäß gleiche Form besitzen, werden für die Herstellung einer kompletten Anordnung allenfalls nur zwei Spritzgießformen benötigt. Dadurch, daß das Organ gleichzeitig zwei Funktionen (Zugentlastung einerseits und Abdichtung andererseits) erfüllt und minimale Maße aufweist, wird der Manipulationsraum (Hohlraum) der Anordnung erhöht und der Materialaufwand verringert.

Weitere zweckmäßige und vorteilhafte Ausgestaltung der Erfindung gehen aus den Unteransprüchen hervor.

Ein Ausführungsbeispiel der Erfindung ist in der Zeichnung schematisch dargestellt und wird im Folgenden näher erläutert. Es zeigen:
- Fig. 1: eine Anordnung in Stirnansicht,
- Fig. 2: einen Schnitt entlang der Linie II - II nach Fig. 1,
- Fig. 3: einen Schnitt entlang der Linie III - III nach Fig. 1,
- Fig. 4,5: einen Schnitt entlang der linie IV - IV, wobei in Fig. 5 die Teile auseinandergezogen sind,
- Fig. 6: das Teil nach Fig. 2 in Draufsicht und ohne Organe,
- Fig. 7: eine Ansicht in Richtung des Pfeiles VII nach Fig. 6,
- Fig. 8: eine Ansicht in Richtung des Pfeiles VIII nach Fig. 6,
- Fig. 9: einen Schnitt entlang der Linie IX - IX nach Fig. 6,
- Fig. 10: einen Schnitt entlang der Linie X - X nach Fig. 6,
- Fig. 11: einen Schnitt entlang der Linie XI - XI nach Fig. 6,
- Fig. 12: einen Schnitt entlang der Linie XII - XII nach Fig. 1,
- Fig. 13: ein Organ in erster Seitenansicht,
- Fig. 14: das Organg nach Fig. 13 in zweiter Seitenansicht,
- Fig. 15: einen Schnitt entlang der Linie XV - XV nach Fig. 13 und
- Fig. 16: einen Schnitt entlang der Linie XVI - XVI nach Fig. 15.

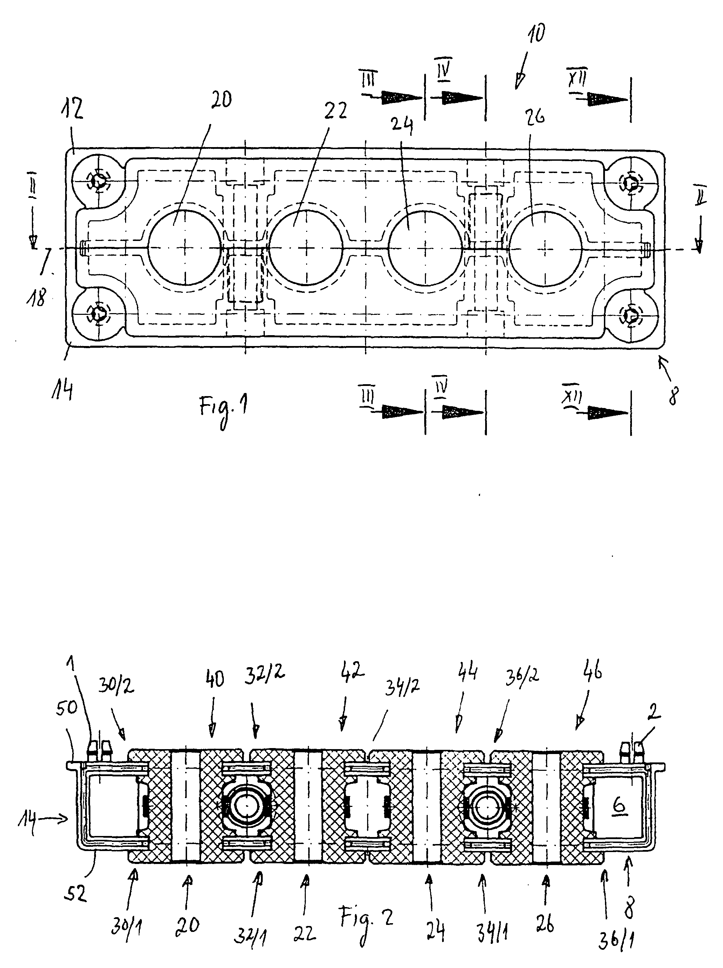

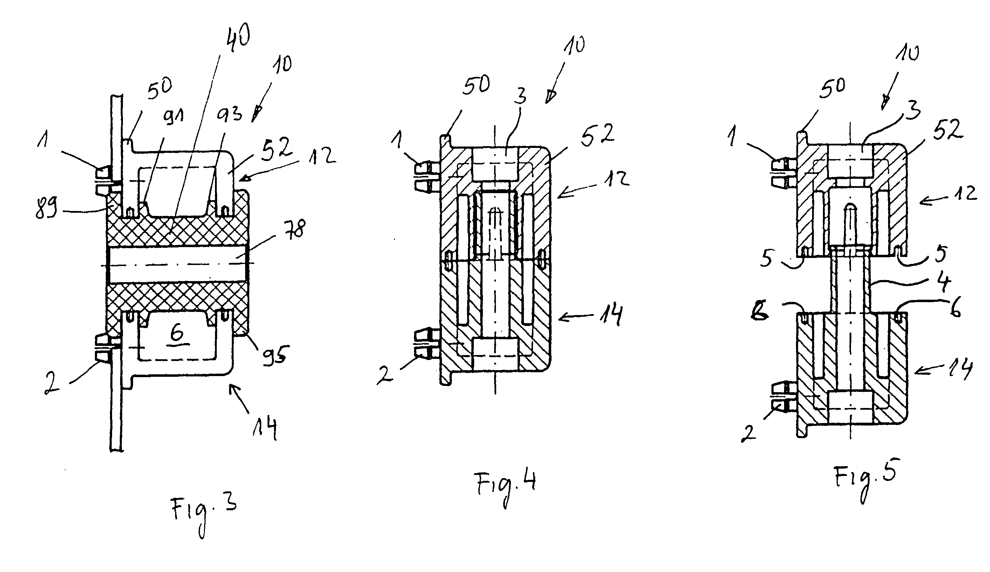

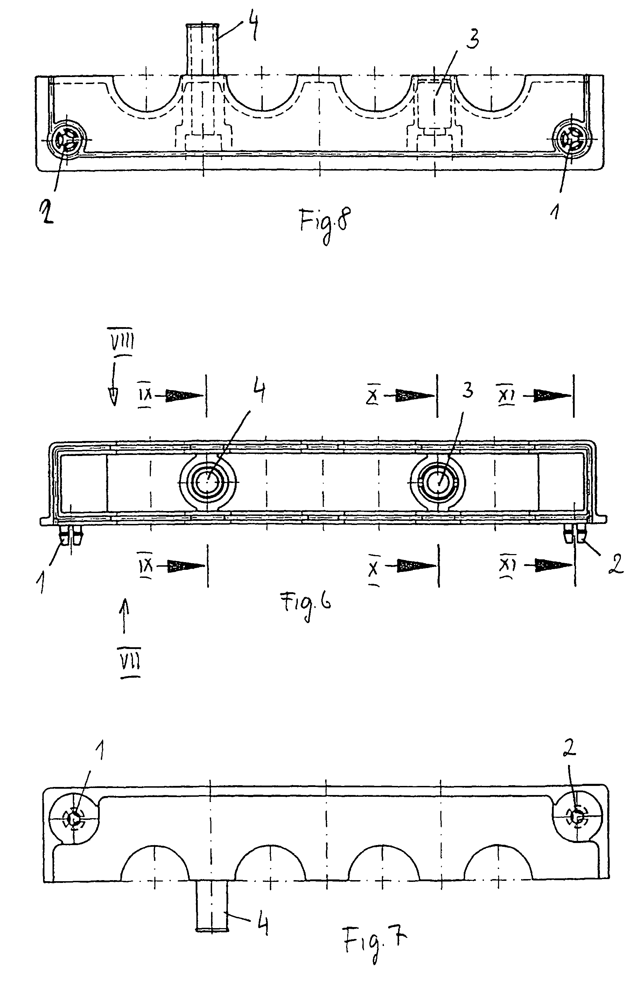

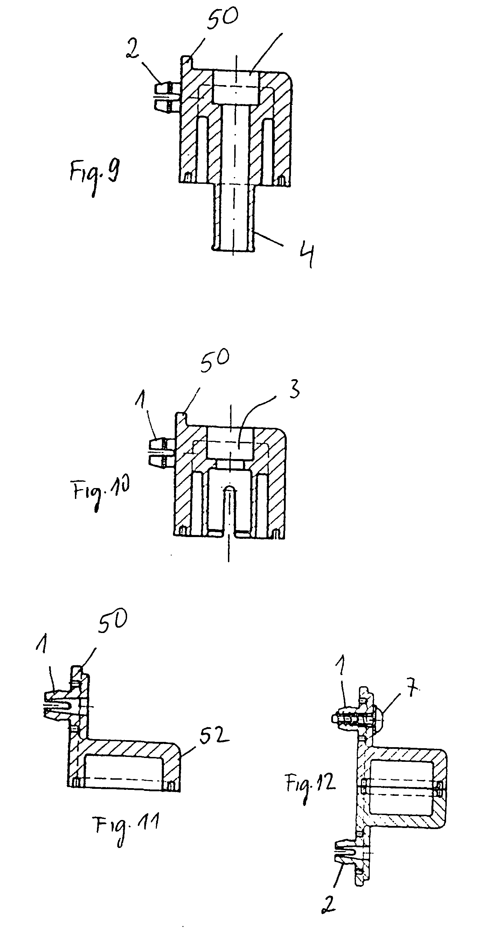

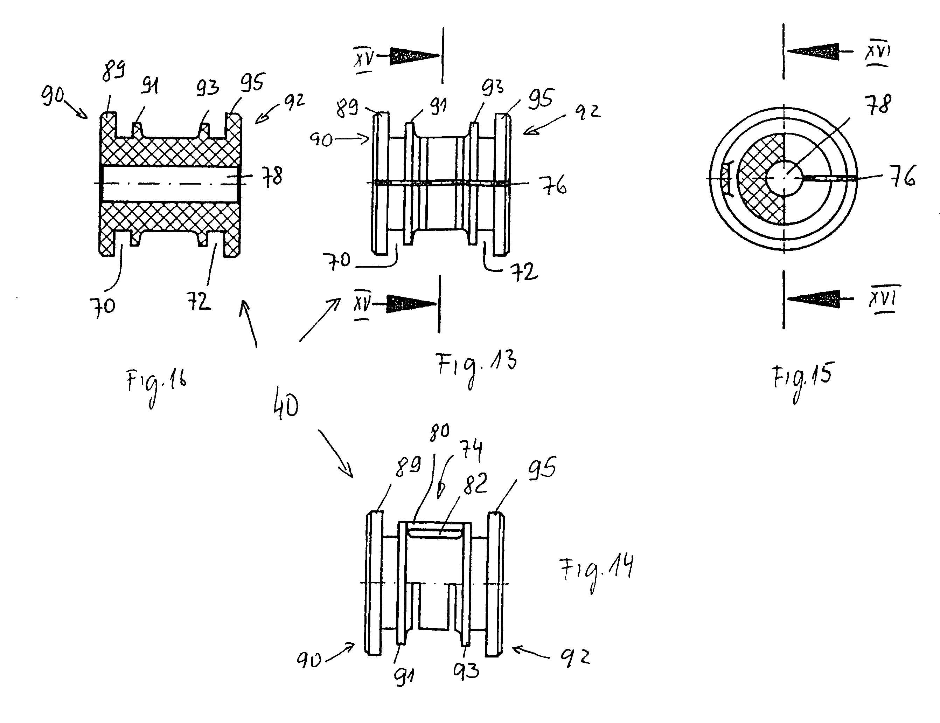

In den Figuren sind eine Anordnung 10 bzw. Teile von dieser Anordnung zum Führen von Kabeln oder Leitungen durch nicht näher gezeigte Wände dargestellt. Die Anordnung besteht im Wesentlichen aus einem Körper 8 mit zwei Teilen 12, 14 und vier Öffnungen 20 - 26, die von einer Teilungsfuge 18 durchquert sind und die Einlaßpartien 30/1 - 36/1 sowie Auslaßpartien 30/2 - 36/2 aufweist. Ferner sind vier Organe 40 - 46 vorgesehen, die im Körper 8 angeordnet sind, zum kraft- und/oder formschlüssigen und/oder dichten Verbinden der Kabel mit dem Körper 8 dienen und regelmäßig aus Gummi bestehen. Die Einlaß- und die Auslaßpartien 30/1 - 36/1; 30/2 - 36/2 sind in separaten Wänden 50, 52 des Körpers 8 ausgebildet, deren Abstand voneinander regelmäßig mehrere cm beträgt. die Organe 40, 46 sind mit beiden Partien 30/1 - 36/1; 30/2 - 36/2 betrieblich, also regelmäßig dicht, ortsfest und zugfest, verbindbar. Die Figuren 1 bis 12 lassen erkennen, dass die Teile 12, 14 jeweils einen Zapfen 4 aufweisen, der in eine entsprechende durchgehende Ausnehmung 3 des andern Teils eingreift, um eine betriebsgemäße Verbindung zwischen diesen Teilen 12, 14 herzustellen. Ferner sind an der Wand 50 zwei außen vorstehende Zapfen 1,2 angeformt, die in vorgesehenen Öffnungen nicht dargestellter Vorrichtungen (Wände, Schränke usw.) eingreifen können und mittels Schrauben 7 (vgl. Fig. 12) mit diesen fest verbindbar sind. Es handelt sich hier um eine Art von Dübelverbindung. Alle Zapfen sind mit dem jeweiligen Teil 12,14 einstückig ausgebildet. Auf den einander zugekehrten Seiten der Teile 12,14, also im Bereich der Stoßstelle 18, sind Nuten 5,6 für Dichtungskörper oder -masse vorgesehen. Diese Dichtungskörper können Teil des Organs 40 oder separate Körper sein. Im Körper 8 kann ferner auch eine Einlaßöffnung (nicht dargestellt) vorgesehen sein, um den Innenraum 6 nachträglich z. B. mit Kunststoffschaumstoff ausschäumen zu können. Dadurch wird eine Anordnung geschaffen, die absolut dicht und zugfest ist.

Man erkennt, daß die Organe 40 - 46 mit den Einlaß- und Auslaßpartien zugfest und annähernd wasserdicht verbindbar sind und daß dieses Organ als ein Hohlzylinder mit mehreren Bünden ausgebildet ist. Allgemein kann das Organ auch aus zwei funktionell miteinander verbindbaren Teilen bestehen. Eine weitere Eigenschaft der Organe 40 - 46 ist, daß sie mit den Partien 30/1 - 36/1; 30/2 - 36/2 formschlüssig verbindbar sind. Wie ferner den Fig. 13 - 16 zu entnehmen ist, weist das Organ 40 im Bereich seiner Partien umfangseitige und radial nach außen hin offene Nuten 70, 72 auf, in welche die Einlaß- und die Auslaßpartien eingreifen. Eine andere Ausführungsform des Organs sieht vor, daß im Verbindungsbereich die Partien kegelstumpfförmig ausgebildet sind. Weitere vorteilhafte Varianten des Organs sehen vor, daß es Dichtlippen aufweist, die mit den Außen- und/oder Innenwänden des Körpers in Druckverbindung stehen.

Die Figuren 13 - 16 lassen erkennen, daß das Organ 40 in Form einer axial geschlitzten Tülle aus Gummi oder Kunststoff ausgebildet ist, die in ihrer Zentralpartie 74 eine Ausnehmung sowie Mittel 80, 82 zum festen Verbinden der Tülle mit dem Kabel oder Leitung aufweist. Für diesen Zweck ist es besonders vorteilhaft, einen nicht näher dargestellten Kabelbinder einzusetzen. Die Mittel 80, 82 sind in einem Hohlraum 6 des Körpers 8 angeordnet und die Teile 12, 14 des Körpers 8 sind miteinander mediumdicht verbindbar. Die Wände 50, 52 verlaufen in etwa parallel zueinander und definieren die Vorder- bzw. die Rückseite des Körpers 8.

Um die Herstellung der Teile 12, 14 zu vereinfachen, ist vorgesehen, daß die Teile 12, 14 identische Formen besitzen. Dabei kann vorgesehen sein, daß die Außenumhüllung des Körpers 8 vorzugsweise würfel-, quader-, zylinder- oder halbkugelförmig ist.

Der Körper 8 kann auch für Anordnungen zum Führen von elek-trischen Kabeln oder Leitungen durch Wände vorgesehen sein und aus zwei Teilen 12, 14 und mindestens einer durchgehenden, von der Teilungsfuge 18 durchquerten Öffnung 20, 26 mit Einlass- und Aus-lasspartie 30/1-36/1; 30/2-36/2 bestehen. Dabei sind die Einlasspartien und die Auslasspartien in separaten und in Abstand zueinander angeordneten Wänden 50, 52 des Körpers 8 ausgebildet. Die Teile 12, 14 sind miteinander durch Rast- und/oder Schnapporgane verbind-bar.

Schließlich betrifft die Erfindung auch das Organ 40-46 für Anordnungen der hier in Rede stehenden Art. Das Organ weist zwei Endpartien 90, 92 auf, von denen die eine Endpartie mit der Einlasspartie 30/1 und die andere Endpartie mit der Auslasspartie 30/2 betrieblich verbindbar ist. Das Organ besitzt ferner die Zentralpartie 74, die mittels eines Verbindungsstücks mit dem aufgenommenen Kabel zugfest verbindbar ist. Die Endpartien 90, 92 sind mit der Einlass- und der Auslasspartie 30/1; 30/2 formschlüssig und annähernd wasserdicht verbindbar. Das Organ ist in Form eines Hohlkörpers aus Gummi oder Kunststoff ausgebildet, das in Längsrichtung geschlitzt ist. Der Mantel der Zentralpartie 74 ist flexibel verformbar und mit dem aufgenommenen Kabel-Abschnitt kraftschlüssig verbindbar. Im Allgemeinen hat das Organ die Form eines Hohlzylinders, dessen Endpartien 90, 92 als Bünde 89, 91, 93, 95 mit radial nach außen offenen Nuten 70, 72 ausgebildet sind, wobei die Zentralpartie 74 die Form eines Zylindermantelsegmentes aufweist, das sich um etwa 180° erstreckt. Die Zentralpartie 74 weist Laschen 82 für das Verbindsstück auf. Der Innenraum 78 des Organs 40 ist so gewählt, dass er das aufgenommene Kabel 84 annähernd formschlüssig umgibt, wodurch eine dichte Verbindung zwischen dem Organ und dem Kabel gewährleistet ist.

Ist der Unterschied zwischen dem Durchmesser, also dem Außendurchmesser des Kabels und dem Innendurchmesser des Innenraums 78 größer, dann ist dennoch eine ordnungsgemäße Verbindung herstellbar, zumal die Kabelbinde 84 im Bereich der Zentralpartie wirksam eingesetzt werden kann.

## Patentansprüche

1. Anordnung (10) zum Führen von elektrischen Kabeln oder elektrischen Leitungen durch Wände mit einem aus zwei Teilen (12, 14) bestehenden und mindestens eine durchgehende, von einer Teilungsfuge (18) durchquerte Öffnung (20-26) mit einem eine Einlasspartie (30/1-36/1) und eine Auslasspartie (30/2-36/2) aufweisenden Körper (8) sowie mindestens einem im Körper (8) angeordneten Organ (40-46) zum kraft- und/oder formschlüssigen Verbinden der Kabel mit dem Körper (8),
**dadurch gekennzeichnet, dass**
- die Einlasspartie (30/1-36/1) und die Auslasspartie (30/2-36/2) in separaten, im Wesentlichen parallelen und die Vorderseite bzw. die Rückseite des Körpers (8) bildenden Wänden (50, 52) des Körpers (8) ausgebildet sind,
- das Organ (40) in Form einer axial geschlitzten Tülle aus flexiblem Werkstoff ausgebildet ist, die mit den Partien (30/1-36/1; 30/2-36/2) betrieblich verbindbar ist, und
- in der Zentralposition der Tülle Mittel (80, 82) zum festen Verbinden der Tülle mit dem Kabel oder Leitung angeordnet sind.

2. Anordnung nach Anspruch 1,
**dadurch gekennzeichnet,**
**dass** das Organ (40-46) einstückig ausgebildet ist oder aus mindestens zwei funktionell miteinander verbindbaren Teilen besteht.

3. Anordnung nach Anspruch 1 oder 2,
**dadurch gekennzeichnet,**
**dass** das Organ (40-46) im Bereich der Partien (30/1-36/1; 30/2-36/2) umfangsseitige und radial nach außen hin offene Nuten (70, 72) aufweist, in welche die Partien (30/1-36/1; 30/2-36/2) eingreifen.

4. Anordnung nach Anspruch 1 oder 2,
**dadurch gekennzeichnet,**
**dass** das Organ im Verbindungsbereich der Partie kegelstumpfförmig ausgebildet ist.

5. Anordnung nach einem der Ansprüche 1 bis 4,
**dadurch gekennzeichnet,**
**dass** das Organ (40-46) Dichtlippen aufweist, die mit den Außen- und/oder Innenwänden (5, 6) des Körpers (8) in Druckverbindung stehen.

6. Anordnung nach einem der Ansprüche 1 bis 5,
**dadurch gekennzeichnet,**
**dass** das Organ (40-46) aus Gummi oder Kunststoff besteht und eine Ausnehmung zur Aufnahme der Mittel (80, 82) aufweist.

7. Anordnung nach einem der Ansprüche 1 bis 6,
**dadurch gekennzeichnet,**
**dass** die Mittel (80, 82) innerhalb des Körpers (8) angeordnet sind.

8. Anordnung nach einem der Ansprüche 1 bis 7,
**dadurch gekennzeichnet,**
**dass** die Teile (12, 14) des Körpers (8) miteinander mediumdicht verbunden sind.

9. Anordnung nach Anspruch 8,
**dadurch gekennzeichnet,**
**dass** im Bereich der Verbindungsstelle (18) der Teile (12, 14) Dichtungsmittel angeordnet sind.

10. Anordnung nach einem der Ansprüche 1 bis 9,
**dadurch gekennzeichnet,**
**dass** die Teile (12, 14) Rast- und/oder Schnapporgane aufweisen, durch welche die Teile (12, 14) miteinander betrieblich verbindbar sind.

11. Anordnung nach einem der Ansprüche 1 bis 10,
**dadurch gekennzeichnet,**
**dass** die Teile (12, 14) lösbar miteinander verbindbar sind und identische Form besitzen.

12. Anordnung nach einem der Ansprüche 1 bis 11,
**dadurch gekennzeichnet,**
**dass** die Außenumhüllung des Körpers (8) vorzugsweise würfel-, quader-, zylinder- oder halbkugelförmig ist.

13. Anordnung nach einem der Ansprüche 1-12,
**dadurch gekennzeichnet,**
**dass** die jeweilige Endpartie (90, 92) des Organs (40-46) mit der Einlass- und der Auslasspartie 30/1; 30/2) formschlüssig und annähernd wasserdicht verbindbar sind.

14. Anordnung nach Anspruch 13 wobei das Organ (40-46) in Form eines Hohlkörpers aus Gummi oder Kunststoff, der in Längsrichtung geschlitzt ist,
**dadurch gekennzeichnet,**
**dass** der Mantel der Zentralpartie (74) flexibel verformbar und mit dem aufgenommenen Kabel kraftschlüssig verbindbar ist.

15. Anordnung nach Anspruch 13 oder 14 mit einem Organ (40-46) mit einem zylinderförmigen Hohlkörper,
**dadurch gekennzeichnet,**
**dass** die Endpartien (90, 92) als Bünde mit radial nach außen hin offenen Nuten (70, 72) ausgebildet sind und die Zentralpartie (74) die Form eines Zylindermantels aufweist, der sich um etwa 180° erstreckt.

16. Anordnung nach Anspruch 15,
**dadurch gekennzeichnet,**
**dass** die Zentralpartie (74) des Organs (40-46) Laschen (82) für das Verbindungsstück aufweist.

## Claims

1. Arrangement (10) for the guiding of electric cables or electric leads through walls, said arrangement having a body (8), which consists of two parts (12, 14) and has at least one continuous aperture (20-26) traversed by a dividing joint (18) with an inlet portion (30/1-36/1) and an outlet portion (30/2-36/2) as well as at least one member (40-46) disposed in the body (8) for the friction-locking and/or form-locking connection of the cable to the body (8), **characterised in that**
- the inlet portion (30/1-36/1) and the outlet portion (30/2-36/2) are configured in separate walls (50, 52) of the body (8), said walls being substantially parallel and forming the front face or respectively the rear face of the body (8),
- the member (40) is in the form of an axially slotted socket which is made from resilient material and is operationally connectable to the portions (30/1-36/1; 30/2-36/2), and
- means (80, 82) are disposed in the central position of the socket for fixedly connecting the socket to the cable or lead.

2. Device according to claim 1, **characterised in that** the member (40-46) is formed in one piece or consists of at least two parts which are operationally interconnectable.

3. Device according to claim or 2, **characterised in that**, in the region of the portions (30/1-36/1; 30/2-36/2), the member (40-46) has grooves (70, 72), which are on the circumference and are open radially towards the outside, the portions (30/1-36/1; 30/2-36/2) engaging in said grooves.

4. Device according to claim 1 or 2, **characterised in that** the member is in the form of a truncated cone in the connection region of the portions.

5. Device according to one of claims 1 to 4, **characterised in that** the member (40-46) has sealing lips, which are compressively connected to the outer walls and/or inner walls (5, 6) of the body (8).

6. Device according to one of claims 1 to 5, **characterised in that** the member (40-46) is made of rubber or plastics material and has a recess for accommodating the means (80, 82).

7. Device according to one of claims 1 to 6, **characterised in that** the means are disposed internally of the body (8).

8. Device according to one of claims 1 to 7, **characterised in that** the parts (12, 14) of the body (8) are interconnected in a medium sealing manner.

9. Device according to claim 8, **characterised in that** sealing means are disposed in the region of the point of connection (18) of the parts (12, 14).

10. Device according to one of claims 1 to 9, **characterised in that** the parts (12, 14) have locking members and/or snap-on members, by means of which the parts (12, 14) are operationally interconnectable.

11. Device according to one of claims 1 to 10, **characterised in that** the parts (12, 14) are interconnectable so as to be detachable and have an identical form.

12. Device according to one of claims 1 to 11, **characterised in that** the outer casing of the body (8) is preferably cube-shaped, square-shaped, cylinder-shaped or hemisphere-shaped.

13. Device according to one of claims 1 - 12, **characterised in that** the respective end portion (90, 92) of the member (40-46) is connectable in a form-locking and approximately waterproof manner to the inlet and the outlet portion (30/1; 30/2)

14. Device according to claim 13, the member (40-46) being in the form of a hollow body which is made of rubber or plastics material and is slit in the longitudinal direction, **characterised in that** the sheathing of the central portion (74) can be deformed in a resilient manner and is connectable to the received cable in a friction-locking manner.

15. Device according to claim 13 or 14 having a member (40-46) with a cylindrical hollow body, **characterised in that** the end portions (90, 92) are in the form of shoulders with grooves (70, 72) which are open radially outwardly, and the central portion (74) is in the form of a cylinder casing which extends about approximately 180°.

16. Device according to claim 15, **characterised in that** the central portion (74) of the member (40-46) has tongues (82) for the connecting piece.

## Revendications

1. Dispositif (10) de guidage de câbles électriques ou de lignes électriques à travers des murs, avec un ? composé de deux parties (12, 14) et au moins un orifice (20 à 26) continu, traversé par une fente de séparation (18), avec un corps (8) comportant une partie d'entrée (30/1 à 36/1) et une partie de sortie (30/2 à 36/2) ainsi qu'au moins un organe (40 à 46), disposé dans le corps (8), servant à la liaison par force et/ou par forme des câbles au corps (8),**caractérisé en ce que** :
- la partie d'entrée (30/1 à 36/1) et la partie de sortie (30/2 à 36/2) sont configurées dans des parois séparées (50, 52) du corps (8), essentiellement parallèles et formant la face avant ou la face arrière du corps (8),
- l'organe (40) est configuré sous la forme d'un passe-câble fendu de manière axiale, fabriqué dans un matériau souple, qui peut être relié techniquement aux parties (30/1 à 36/1 ; 30/2 à 36/2) et
- des moyens (80, 82) sont disposés, dans la position centrale du passe-câble, pour relier solidement le passe-câble au câble ou à la ligne.

2. Dispositif selon la revendication 1, **caractérisé en ce que** l'organe (40 à 46) est configuré d'un seul tenant ou est composé d'au moins deux parties pouvant être reliées l'une à l'autre de manière fonctionnelle.

3. Dispositif selon la revendication 1 ou 2, **caractérisé en ce que** l'organe (40 à 46) comprend, au niveau des parties (30/1 à 36/1 ; 30/2 à 36/2) des rainures (70, 72) situées du côté circonférentiel et radialement ouvertes vers l'extérieur, dans lesquelles les parties (30/1 à 36/1 ; 30/2 à 36/2) s'engrènent.

4. Dispositif selon la revendication 1 ou 2, **caractérisé en ce que** l'organe est configuré sous une forme tronconique dans la zone de liaison de la partie.

5. Dispositif selon l'une des revendications 1 à 4, **caractérisé en ce que** l'organe (40 à 46) comprend des lèvres d'étanchéité qui sont en relation par compression avec les parois externes et/ou internes (5, 6) du corps (8).

6. Dispositif selon l'une des revendications 1 à 5, **caractérisé en ce que** l'organe (40 à 46) est composé de caoutchouc ou de matière plastique et comporte un creux pour le logement des moyens (80, 82).

7. Dispositif selon l'une des revendications 1 à 6, **caractérisé en ce que** les moyens (80, 82) sont disposés à l'intérieur du corps (8).

8. Dispositif selon l'une des revendications 1 à 7, **caractérisé en ce que** les parties (12, 14) du corps (8) sont reliées l'une à l'autre de manière étanche aux fluides.

9. Dispositif selon la revendication 8, **caractérisé en ce que** des moyens d'étanchéification sont disposés au niveau du point de jonction (18) des parties (12, 14),

10. Dispositif selon l'une des revendications 1 à 9, **caractérisé en ce que** les parties (12, 14) comportent des organes d'arrêt et/ou à enclenchement au moyen desquels les parties (12, 14) peuvent être techniquement reliées l'une à l'autre.

11. Dispositif selon l'une des revendications 1 à 10, **caractérisé en ce que** les parties (12, 14) peuvent être reliées l'une à l'autre d'une manière détachable et possèdent une forme identique.

12. Dispositif selon l'une des revendications 1 à 11, **caractérisé en ce que** l'enveloppe externe du corps (8) a de préférence la forme d'un cube, parallélépipède, cylindre ou hémisphère.

13. Dispositif selon l'une des revendications 1 à 12, **caractérisé en ce que** la partie finale respective (90, 92) de l'organe (40 à 46) peut être reliée à la partie d'entrée et à la partie de sortie (30/1 ; 30/2) par forme et de manière à peu près étanche.

14. Dispositif selon la revendication 13, dans lequel l'organe (40 à 46) a la forme d'un corps creux en caoutchouc ou matière plastique qui est fendu dans le sens longitudinal, **caractérisé en ce que** l'enveloppe de la partie centrale (74) peut se déformer avec souplesse et peut être reliée, par la force, au câble logé.

15. Dispositif selon la revendication 13 ou 14 avec un organe (40 à 46) muni d'un corps creux cylindrique, **caractérisé en ce que** les parties finales (90, 92) sont configurées en tant que collets avec des rainures (70, 72) radialement ouvertes vers l'extérieur et la partie centrale (74) a la forme d'une enveloppe cylindrique qui s'étend à environ 180°.

16. Dispositif selon la revendication 15, **caractérisé en ce que** la partie centrale (74) de l'organe (40 à 46) comprend des éclisses (82) pour la pièce de jonction.
